(19) Europäisches Patentamt
European Patent Office
Office européen des brevets

(11) **EP 3 919 157 A1**

(12) **EUROPEAN PATENT APPLICATION**
published in accordance with Art. 153(4) EPC

(43) Date of publication:
**08.12.2021 Bulletin 2021/49**

(51) Int Cl.:
**B01D 39/20** *(2006.01)*  **B01D 46/00** *(2006.01)*
**C04B 38/00** *(2006.01)*  **F01N 3/022** *(2006.01)*

(21) Application number: **20848626.6**

(22) Date of filing: **02.07.2020**

(86) International application number:
**PCT/JP2020/025953**

(87) International publication number:
**WO 2021/020015 (04.02.2021 Gazette 2021/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2019 JP 2019139122**

(71) Applicant: **Denso Corporation
Aichi 448-8661 (JP)**

(72) Inventors:
• **MIZUTANI Keisuke
  Nisshin-city, Aichi 470-0111 (JP)**
• **KOIKE Kazuhiko
  Nisshin-city, Aichi 470-0111 (JP)**
• **ISHIHARA Mikio
  Kariya-city, Aichi 448-8661 (JP)**
• **KAYAMA Hiroaki
  Kariya-city, Aichi 448-8661 (JP)**

(74) Representative: **Kuhnen & Wacker
Patent- und Rechtsanwaltsbüro PartG mbB
Prinz-Ludwig-Straße 40A
85354 Freising (DE)**

(54) **EXHAUST GAS PURIFICATION FILTER**

(57)    An exhaust gas purification filter (1) is disposed in an exhaust passage of a gasoline engine. The exhaust gas purification filter (1) has a partition wall (11) with a plurality of pores (110), a plurality of cells (12) partitioned by the partition walls (11), and sealing parts (13) that alternately seal ends of the plurality of cells (12) in the exhaust gas purification filter. In the partition wall (11), a number of communicating pores (111) per 1 $mm^2$ of the partition wall is 4,000 or more, and A $\geq$ B is satisfied with an average pore diameter of the partition wall (11) as A($\mu$m) and an average surface opening diameter of the pores (110) at a surface of the partition wall (11) as B($\mu$m).

FIG.14

EP 3 919 157 A1

**Description**

[Cross Reference to Related Applications]

The present application is based on and claims the benefit of priority from earlier Japanese Patent Application number 2019-139122, filed in Japan on July 29, 2019, the entire contents of which are hereby incorporated by reference.

[Technical Field]

The present disclosure relates to an exhaust gas purification filter.

[Background Art]

Exhaust gases discharged from internal combustion engines such as gasoline engines and diesel engines contain therein particulate matter (hereinafter, referred to appropriately as "PM" in some cases) referred to as particulates. For collecting the PM in the exhaust gases to purify the exhaust gases, exhaust gas purification filters are disposed in the exhaust passages of the internal combustion engines.
As this type of exhaust gas purification filter, for example, Patent Literature 1 discloses an exhaust gas purification filter that satisfies $N/\varepsilon \geq 60{,}000$ (/mm³), where $\varepsilon$ and $N$ respectively represent the proportion of pores to a partition wall in volume and the number of pore elements included in a partition wall of 1 mm³ in the case where 3D models of a pore part are separated at a constricted part from each other to produce a pore element group.

[Citation List]

[Patent Literature]

[PTL 1] JP 2017-164691 A

[Summary of the Invention]

[Technical Problem]

The amount of the PM discharged from a gasoline engine is very much smaller than the amount of the PM discharged from a diesel engine. Because of the introduced regulations for the number concentration of PM, however, vehicles with gasoline engines (hereinafter, referred to as "gasoline vehicles") are also required to be equipped with gasoline particulate filters (hereinafter, referred to appropriately as a "GPF" in some cases) that are capable of collecting the PM discharged from the gasoline engines.
In a GPF, a catalyst for purifying exhaust gases may be coated. The GPF with a catalyst coated is believed to be located immediately just below a gasoline engine or immediately downstream a start (S/C) catalyst, from perspectives such as ensuring the exhaust gas purification performance and recycling PM deposited. In this case, a reduction in filter volume is desired because the exhaust layout is limited. The reduction in filter volume, however, leads to an increase in pressure drop (also can be referred to as "pressure loss"). In addition, in gasoline engines, the pressure drops are, because of the high temperature and high flow velocity of the exhaust gas, more likely to increase as compared with diesel engines. In addition, closing pores of partition walls due to the catalyst coat thereon also causes the pressure drop to be increased. As described above, the GPF is required to further reduce the initial pressure drop.
In addition, the amount of the PM discharged from a gasoline engine is extremely small as described above. For that reason, the GPF requires a considerably long time until PM deposition shifts from partition wall inner-portion deposition to partition wall outer-portion deposition (wall deposition), as compared with a diesel particulate filter (hereinafter, referred to as a "DPF" in some cases). In some cases, the PM deposition may fail to shift at all to external partition wall deposition. In addition, if the catalyst is coated, the pores of the partition wall are closed, thus degrading the PM collection efficiency. Accordingly, the GPF is required to be capable of ensuring the initial PM collection efficiency.
In addition to the foregoing, the PM contains therein ash derived from engine oil or the like, besides solid carbon (soot). The ash is a component that remains also after recycling the PM. In the gasoline vehicles, it is may want to prevent remaining ash deposited by the use of the vehicles over time from increasing the pressure drop. It is to be noted that the DPF also undergoes an increase in pressure drop with deposition of remaining ash by the use over time, but keeping the pressure drop from increasing after ash deposition has not been an issue so far, because of the low exhaust gas temperature, and also of the room for exhaust layout.
It is to be noted that the technique in Patent Literature 1 is considered capable of improving the PM collection efficiency by employing the configuration mentioned above, but depending on the diameter of the constricted part, the PM collection efficiency is hardly considered always improved. In addition, the presence of a large number of constricted parts also has the possibility of leading to a worsen pressure drop.

An object of the present disclosure to provide an exhaust gas purification filter that is capable of reducing an initial pressure drop, ensuring an initial PM collection efficiency, and keeping a pressure drop from increasing after ash deposition.

An aspect of the present disclosure is an exhaust gas purification filter configured to be disposed in an exhaust passage of a gasoline engine, which includes:

partition walls each including a plurality of pores;
a plurality of cells partitioned by the partition walls; and
sealing parts that alternately seal ends of the plurality of cells in the exhaust gas purification filter, wherein:
the partition walls each includes communicating pores communicated with the adjacent cells;
a number of communicating pores per 1 mm$^2$ of the partition wall is 4,000 or more; and
A $\geq$ B is satisfied, where A($\mu$m) is an average pore diameter of the partition wall and B($\mu$m) is an average surface opening diameter of the pores at a surface of the partition wall.

[Advantageous Effects of the Invention]

The exhaust gas purification filter mentioned above has the specific configuration mentioned above, and the exhaust gas purification filter is adapted, in particular, such that the number of communicating pores per 1 mm$^2$ of the partition wall is adjusted to be equal to or more than a specific number, and the average pore diameter A($\mu$m) of the partition wall and the average surface opening diameter B($\mu$m) of the pores at the partition wall surface satisfy A $\geq$ B. Accordingly, the exhaust gas purification filter mentioned above is capable of reducing an initial pressure drop, ensuring an initial PM collection efficiency, and keeping a pressure drop from increasing after ash deposition.

It is to be noted that the reference signs in the parenthesis, mentioned in the claims, are intended to the correspondence relations with the specific means described in the embodiments described later, but not intended to limit the technical scope of the present disclosure.

[Brief Description of the Drawings]

The above-mentioned objects of the present disclosure, and other objects, features, and advantages will become more apparent from the following description with reference to the accompanying drawings below.

Fig. 1 is a perspective view of an exhaust gas purification filter according to a first embodiment.
Fig. 2 is an axial cross-sectional view of the exhaust gas purification filter according to a first embodiment.
Fig. 3 is a diagram illustrating exhaust gas flows in the exhaust gas purification filter according to a first embodiment.
Fig. 4 is a diagram showing an example of a gray value diagram for use in measuring the number of communicating pores in a partition wall.
Fig. 5 is a diagram showing an example of a communicating pore in a partition wall structure model acquired in measuring the number of communicating pores in a partition wall.
Fig. 6 is a diagram showing an example of a backscattered electron image of a partition wall surface through a scanning electron microscope, acquired for measuring the surface opening diameters of pores at a partition wall surface in the exhaust gas purification filter according to a first embodiment.
Fig. 7 is a diagram showing an example of a binarized image obtained by binarization processing of the backscattered electron image in Fig. 6.
Fig. 8 is a diagram schematically illustrating the microstructure of PM.
Fig. 9 is a cross-sectional view of a partition wall shown at an enlarged partition wall surface on the side into which an exhaust gas flows.
Fig. 10 is a view illustrating areas around surface openings in the partition wall where PM is segregated, the partition wall being illustrated in Fig. 9.
Fig. 11 is a view illustrating ash contained in the PM, which remains after recycling the PM shown in Fig. 10.
Fig. 12 is a view illustrating PM being collected again while ash components illustrated in Fig. 11 remain.
Fig. 13 is a view of the ash allowed to cross-link at the surface openings of pores at the partition wall surface by repeating deposition of the PM and recycling of the PM further from the condition of Fig. 12.
Fig. 14 is a view of the ash cross-linking at the surface openings as shown in Fig. 13, which is detached by the flow of an exhaust gas, and the detached ash transported to a sealing part on the gas outflow side.
Fig. 15 is a diagram illustrating a method for measuring a gas permeability coefficient for an exhaust gas purification filter.

Fig. 16(a) is a diagram illustrating an example of a tape for sealing part formation, attached to an upstream end surface of a measurement sample collected from an exhaust gas purification filter, and Fig. 16(b) is a diagram illustrating an example of a tape for sealing part formation, attached to a downstream end surface of the measurement sample collected from the exhaust gas purification filter.

Fig. 17 is a diagram showing an example of the diagram of relationship between a gas flow velocity (X axis) and a pressure drop (Y axis).

Fig. 18 is a diagram showing the relationship between a gas permeability coefficient ratio $k_c/k_{10}$ and a rate of increase in pressure drop, obtained in an experiment example.

[Description of Embodiments]

(First Embodiment)

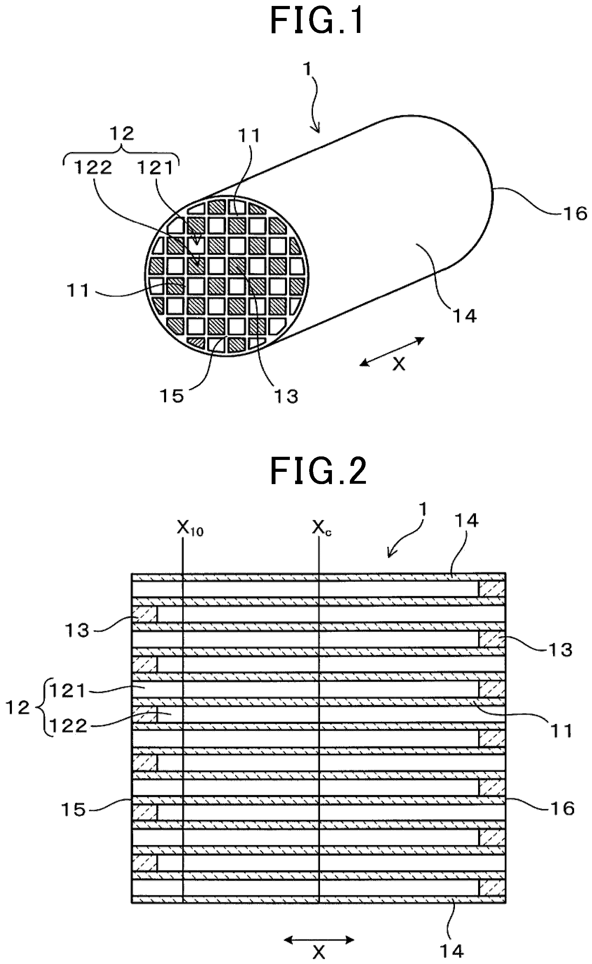

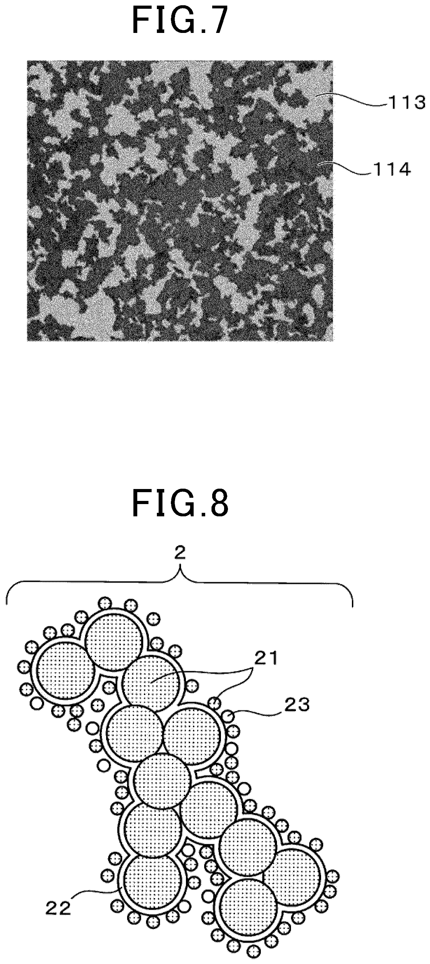

An exhaust gas purification filter according to a first embodiment will be described with reference to Figs. 1 to 17. As illustrated in Figs. 1 to 3, the exhaust gas purification filter 1 according to the present embodiment is intended to be disposed for use in an exhaust passage (not shown) of a gasoline engine. More specifically, the exhaust gas purification filter 1 is a gasoline particulate filter (GPF) that is capable of collecting a PM 2 (see Fig. 8 described later) discharged from a gasoline engine. It is to be noted that the directions of the double-headed arrows shown in Figs. 1 to 3 are defined as the filter axial direction X of the exhaust gas purification filter 1.

The exhaust gas purification filter 1 has partition walls 11, a plurality of cells 12, and sealing parts 13. As illustrated in Figs. 1 and 2, the partition walls 11 can be provided inside a skin part 14 formed, for example, in the shape of a tube such as a cylinder, so as to form a shape such as a grid in a cross-sectional view perpendicular to the filter axial direction X. More specifically, the partition walls 11, the cells 12, and the skin part 14 constitute a honeycomb structure. For the exhaust gas purification filter 1, the partition walls 11 and the skin part 14 can be formed from, for example, cordierite or the like. In the case where the material of the partition walls 11 is cordierite, early warming-up of the exhaust gas purification filter 1 is more easily achieved because of the improved thermal shock resistance and the ability to reduce the heat capacity. In addition, the sealing parts 13 can be formed from, for example, ceramics such as cordierite, but may be other materials.

The plurality of cells 12 is formed to be partitioned by the partition walls 11. The cells 12 are surrounded by the partition walls 11 to form gas flow channels. The extending directions of the cells 12 typically coincide with filter axial direction X. In a cross-sectional view perpendicular to the filter axial direction X, the cell shape can be quadrangular, for example, as illustrated in Fig. 1. The cell shape is not limited to any quadrangular shape, and may be, for example, polyangular, e.g., triangular or hexagonal, or circular. In addition, the cell shape may be composed of a combination of two or more different shapes.

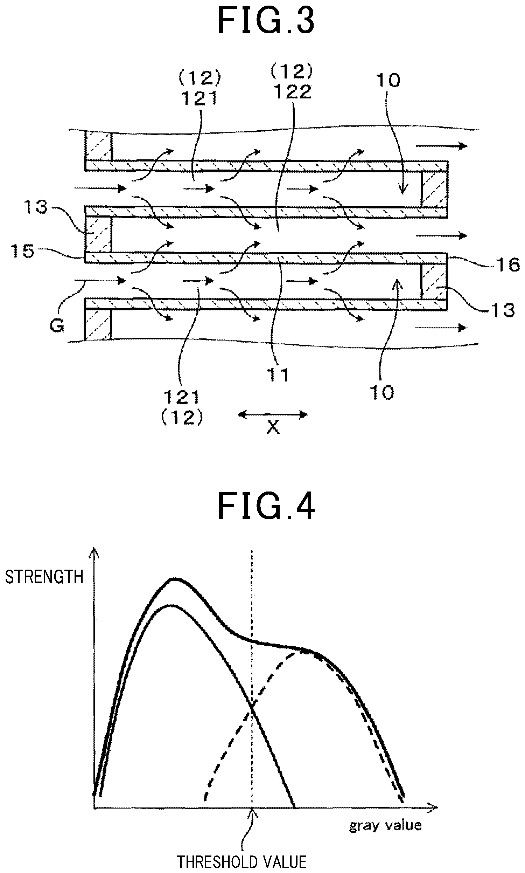

The plurality of cells 12 is, as illustrated in Fig. 2, alternately sealed with the sealing parts 13 at ends of the filter. Specifically, the plurality of cells 12 can include: a first cell 121 that is open to a filter end surface 15 (upstream end surface) on the exhaust gas inflow side and is closed by the sealing part 13 at a filter end surface 16 (downstream end surface) on the exhaust gas outflow side; and a second cell 122 that is open to the filter end surface 16 on the exhaust gas outflow side and is closed by the sealing part 13 at the filter end surface 15 on the exhaust gas inflow side. Thus, as illustrated in Fig. 3, an exhaust gas G flowing into the first cell 121 from the filter end surface 15 on the exhaust gas inflow side flows through the first cell 121 and also through the porous partition wall 11 to the second cell 122. The exhaust gas G reaching the second cell 122 flows through the second cell 122, and the exhaust gas G is discharged from the filter end surface 16.

The first cell 121 and the second cell 121 can be formed to be, for example, alternately arranged adjacent to each other both in a transverse direction orthogonal to the filter axial direction X, and in a longitudinal direction orthogonal to both the filter axial direction X and the transverse direction. In this case, when the filter end surface 15 on the exhaust gas inflow side or the filter end surface 16 on the exhaust gas outflow side is viewed in the filter axial direction X, the first cell 121 and the second cell 122 are arranged, for example, in a check pattern. The first cell 121 and second cell 122 adjacent to each other are separated with the partition wall 11 interposed therebetween.

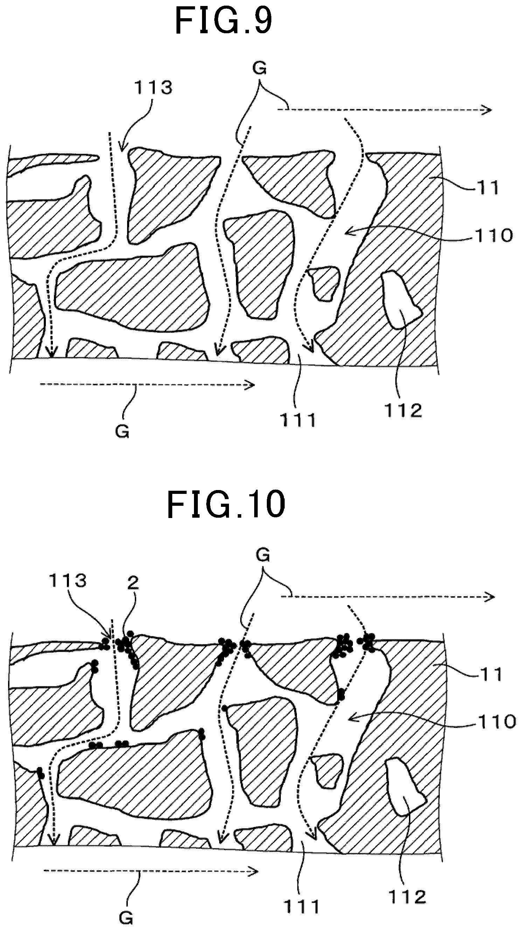

The partition wall 11 has, as illustrated in Fig. 9, a large number of pores 110. The partition wall 11 includes a communicating pore 111 that is communicated with the adjacent first cell 121 and second cell 122. The communicating pore 111 are specifically communicated with the first cell 121 and second cell 122 adjacent to each other. The partition walls 11 may include, besides communicating pores 111, non-communicating pores 112 that do not communicate with the adjacent cells 12, specifically, that do not communicate with the first cell 121 and second cell 122 adjacent to each other. It is to be noted that although the communicating pore 111 is two-dimensionally simplified and shown in Fig. 9 and the like, most of communicating pores 111 are considered three-dimensionally intersecting.

In the exhaust gas purification filter 1, the number of communicating pores as the number of communicating pores 111 per 1 mm$^2$ of the partition wall is considered 4,000 or more. The number of communicating pores per 1 mm$^2$ of the partition wall is calculated from a partition wall structure model produced three-dimensionally from a tomogram of the partition wall 11 acquired by an X-ray computed tomographic (CT) scanner. Specifically, the number of communicating pores per 1 mm$^2$ of the partition wall is measured in the following manner.

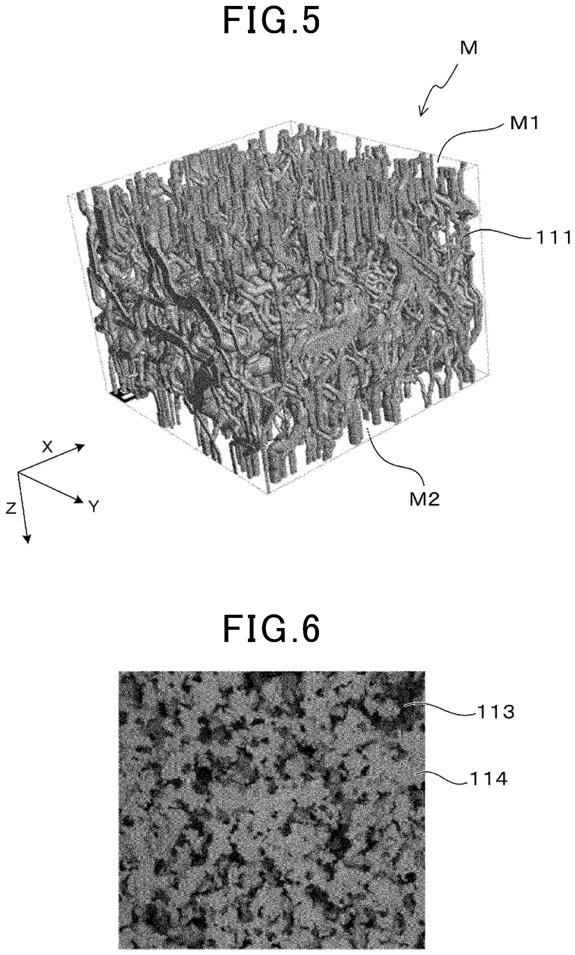

From the exhaust gas purification filter 1, a partition wall piece is cut out. However, portions with the sealing parts 13 are excluded. The partition wall piece is considered as a cuboid of about 700 $\mu$m in length in the filter axial direction X, and of about 700 $\mu$m in width in the partition wall surface direction orthogonal to the filter axial direction X, with the partition wall thickness in thickness. Then, the partition wall piece is embedded in a resin while carrying out vacuum deaeration, and used as an X-ray CT sample. For this sample, an X-ray CT scanner is used to acquire sequential tomographic images of the sample under the imaging conditions of voltage: 80 kV, step: 0.1°, and resolution: 0.684787 $\mu$m/pixel. The obtained continuous two-dimensional image in the TIFF is loaded under the condition of 0.6874787 $\mu$m/voxel with the use of the importGeO-Vol function, which is one of the interfaces of the microstructure simulation software GeoDict developed by Math2Market GmbH. Then, for separating the frame part and space part of the loaded image, the partition wall piece is three-dimensionally modeled with, as a threshold value, the intersecting part in the case of separation into two peaks in such a gray value diagram as shown in Fig. 4. Then, the noise of the three-dimensional model is removed, and the unnecessary part is removed so as to provide 600 × 600× partition wall thickness, voxels. Then, the number of communicating pores 111 in the three-dimensional partition wall structure model M is derived with the use of the Percolation Path among the Porodict functions, which is one of the GeoDict modules. Fig. 5 shows an example of a communicating pore in a partition wall structure model. It is to be noted that an upper surface M1 and a back surface M2 in the partition wall structure model M respectively represent a partition wall surface on the exhaust gas inflow side and a partition wall surface on the exhaust gas outflow side. After the derivation mentioned above, the derived number of communicating pores is converted so as to be the number of communicating pores per area 1 mm$^2$ of the partition wall surface (upper surface M1) on the exhaust gas inflow side. Each of the partition wall pieces cut out from six points is subjected to the measurement mentioned above, and the average value for the converted values from the obtained respective numbers of communicating pores is referred to as the number of communicating pores per 1 mm$^2$ of the partition wall. It is to be noted that the partition wall pieces are specifically collected from the six points of: a central part, an upstream part closer to the sealing part 13 at the filter end surface 15, and a downstream part closer to the sealing part 13 at the filter end surface 16 in the filter axial direction X passing through the center of the diameter in the exhaust gas purification filter 1; and a central part, an upstream part closer to the sealing part 13 at the filter end surface 15, and a downstream part closer to the sealing part 13 at the filter end surface 16 in the filter axial direction X at the periphery of the exhaust gas purification filter 1.

In the exhaust gas purification filter 1, the average pore diameter of the partition wall 11 (that is, the average pore diameter in the partition wall 11) is referred to as A($\mu$m). The average pore diameter A is the partition wall 11 is measured in the following manner.

The average pore diameter A of the partition wall 11 is measured by a mercury porosimeter based on the principle of the mercury intrusion technique. Specifically, a specimen is cut out from the exhaust gas purification filter 1. However, portions with the sealing parts 13 are excluded. The specimen is considered as a cuboid of 15 mm × 15 mm in dimension in a direction orthogonal to the filter axial direction X and of 20 mm in length in the filter axial direction X. Then, the specimen is disposed in a measurement cell of the mercury porosimeter, and the pressure in the measurement cell is reduced. Thereafter, mercury is introduced into the measurement cell, and subjected to pressurization, and the pore diameter and the pore volume are measured from the pressure of the pressurization and the volume of the mercury introduced into the pores 110 of the partition wall 11 in the specimen. The measurement is performed at a pressure in the range of 0.5 to 20,000 psia. It is to be noted that 0.5 psia corresponds to 0.35 × 10$^{-3}$ kg/mm$^2$, and 20000 psia corresponds to 14 kg/mm$^2$. The pore diameter range corresponding to the foregoing pressure range is 0.01 to 420 $\mu$m. As the constants for the calculation of the pore diameter from the pressure, a contact angle 140° and a surface tension of 480 dyn/cm are used. The average pore diameter A refers to a pore diameter corresponding to a cumulative pore volume of 50% in the order from the smallest pore diameter (a pore diameter corresponding to 50% in the integrated value of the pore volume) dso in the pore size distribution of the partition wall 11.

In the exhaust gas purification filter 1, the average surface opening diameter of the pores 110 at the surface of the partition wall 11 is referred to as B($\mu$m). The average surface opening diameter of the pores 110 at the surface of the partition wall 11 is measured in the following manner.

Surface openings 113 made by the pores 110 are formed at the surface of the partition wall 11 on the side into which the exhaust gas G flows and at the surface of the partition wall 11 on the side from which the exhaust gas G flows. In this case, a backscattered electron image of the surface of the partition wall 11 on the side into which the exhaust gas G flows (that is, the surface of the partition wall 11 that faces the first cell 121 described above) is acquired with the use of a scanning electron microscope (SEM). In the portions with the sealing parts 13, however, the surface of the partition wall 11 is excluded. In this regard, the acceleration voltage may be 10 kV, and the magnification may be 300 times. Fig. 6 shows an example of a backscattered electron image of the surface of the partition wall 11. In the backscattered electron image of Fig. 6, a black region corresponds to the surface openings 113 at the surface of the partition wall 11, and a light gray region corresponds to a frame part 114 at the surface of the partition wall 11. Then, the acquired image is subjected to binarization processing with the use of image analysis software (WinROOF from Mitani Corporation). The binarization processing is intended to distinguish the surface openings 113 at the surface of the partition wall 11 and the frame part 114 at the surface of the partition wall 11. Because the surface openings 13 and the frame part 114 differ in luminance from each other, the noise remaining in the acquired image is removed in the binarization processing, and the binarization processing is performed after setting a threshold value. Because the threshold value varies depending on acquired images, the threshold value that allows the separation between the surface openings 113 and the frame part 114 is set for each acquired image while visually checking the acquired image. Fig. 7 shows an example of a binarized image. In the binarized image of Fig. 7, a light gray region corresponds to the surface openings 113 at the surface of the partition wall 11, and a black region corresponds to the frame part 114 at the surface of the partition wall 11. For the surface openings 113 in the binarized image obtained, the equivalent circle diameter corresponding to the diameter of an exact circle that has the same area as the area of the surface opening 113 is calculated for each surface opening 113, and the calculated equivalent circle diameters are all integrated and then divided by the number of the surface openings 113 to define the obtained value as a surface opening diameter. The average value for the respective surface opening diameters obtained from the respective binarized images determined for five different random points of the surface of the partition wall 11 in the manner mentioned above is referred to as the average surface opening diameter B of the pores 110 at the surface of the partition wall 11.

For the exhaust gas purification filter 1, the average pore diameter A($\mu$m) and average surface opening diameter B($\mu$m) described above satisfy $A \geq B$.

For the exhaust gas purification filter 1, the number of communicating pores per 1 mm$^2$ of the partition wall, defined in the manner mentioned above, is 4,000 or more and the value of the average pore diameter A of the partition wall 11 is equal to or more than the value of the average surface opening diameter B of the pores 110 at the surface of the partition wall 11 ($A \geq B$). Accordingly, the exhaust gas purification filter 1 allows for reducing the initial pressure drop, ensuring the initial PM collection efficiency, and keeping the pressure drop from increasing after ash deposition. A mechanism that achieves such advantageous effects will be described below with reference to Figs. 8 to 14.

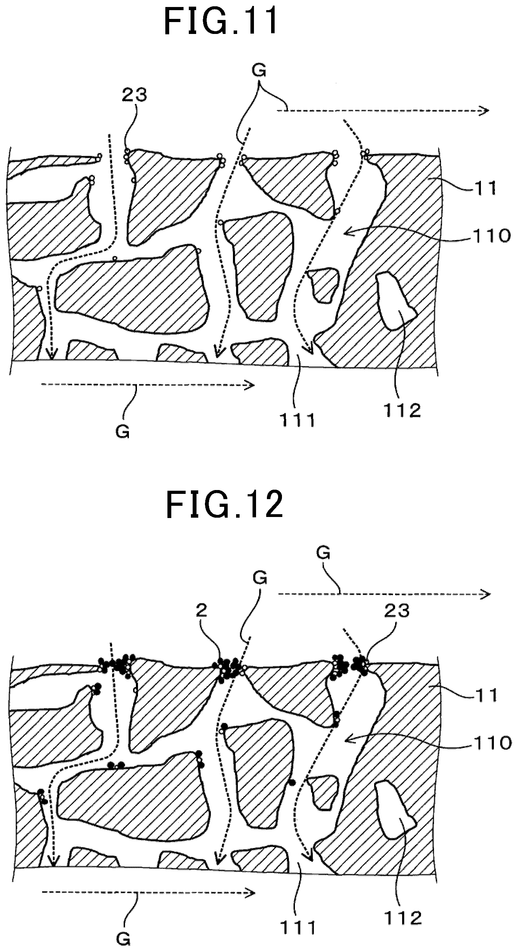

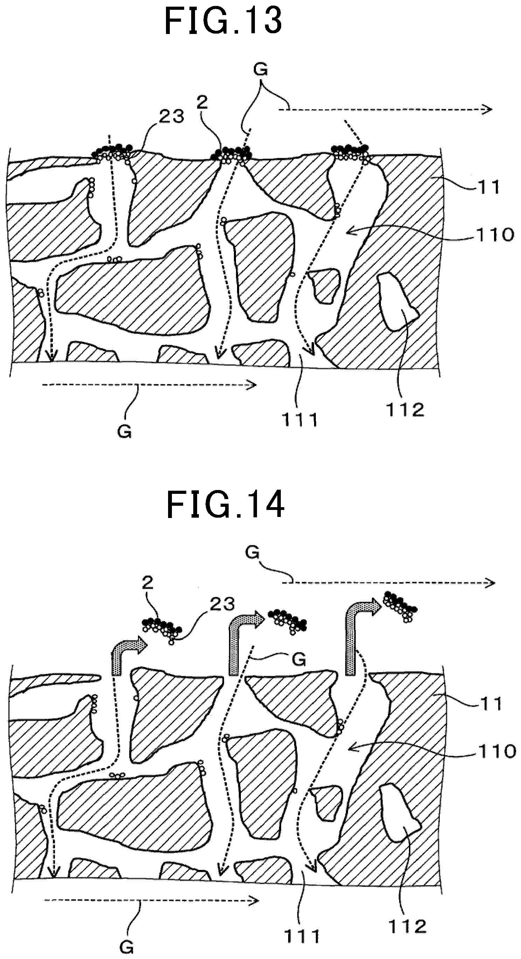

As shown in Fig. 8, the PM 2 includes, in addition to solid carbon (soot) 21 as a main constituent, soluble organic fractions (SOFs) 22 and ash components (Ash) 23 derived from engine oil or the like. As shown in Fig. 9, the PM 2 is collected in passing through the pores 110 in the partition walls 11. It is to be noted that an arrow in Fig. 9 indicates the flow of an exhaust gas G flowing through the pores 110. In the case where the PM 2 including the ash 23 is collected by the partition wall 11 adapted such that the number of communicating pores per 1 mm$^2$ of the partition wall is equal to or more than the specific value described above and such that $A \geq B$ is satisfied with the average pore diameter of the partition wall 11 as A($\mu$m) and the average surface opening diameter at the surface of the partition wall as B($\mu$m), the PM 2 is, as shown in Fig. 10, segregated near the surface openings 113 formed at the surface of the partition wall 11 on the side into which the exhaust gas G flows. Furthermore, as shown in Fig. 11, the ash 23 contained in the PM 2 remains after the PM 2 is recycled. As shown in Fig. 12, with the ash 23 remaining, in the case where the PM 2 including the ash 23 is collected again by the partition wall 11, the PM 2 is also deposited near the remaining ash 23 while being segregated near the surface openings 113 at the surface of the partition wall 11. As shown in Fig. 13, the deposition of the PM 2 including the ash 23 and the recycling of the PM 2 are repeated and cause cross-linking, with the ash 23, the surface openings 113 at the surface of the partition wall 11. Thereafter, as illustrated in Fig. 14, the ash 23 cross-linking the surface openings 113 becomes detached during the recycling of the PM 2 or by the flow of the exhaust gas G, and the detached ash 23 is transported to the sealing part 13 on the gas outflow side. The transported ash 23 is deposited on a most downstream filter part 10 (see Fig. 3; the most downstream filter part 10 can be also referred to as a filter bottom). The ash 23 covering the external surface of the partition wall 11 increases the pressure drop, whereas the ash 23 deposited on the most downstream filter part 10 is unlikely to increase the pressure drop. More specifically, employing of the partition wall 11 adapted such that the number of communicating pores per 1 mm$^2$ of the partition wall is equal to or more than the specific value described above and such that $A \geq B$ is satisfied with the average pore diameter of the partition wall 11 as A($\mu$m) and the average surface opening diameter at the surface of the partition wall as B($\mu$m) cross-links the ash 23 at the surface openings 113 of the partition wall 11, thereby making the ash 23 more likely to be detached as described above. As a result, more ash 23 can be deposited on the most downstream filter part 10 than the ash 23 covering the external surface of the partition wall 11. With more ash 23 deposited on the most downstream filter part 10, the gas permeability of the partition wall 11 after the deposition of the ash 23 is also increased, thereby resulting in a lower pressure drop. The foregoing mechanism is believed to allow for achieving a balance between reducing the initial pressure drop of the exhaust gas purification filter 1 and ensuring the initial PM collection efficiency thereof, as well as keeping the pressure drop from increasing after the deposition of the ash 23.

In the exhaust gas purification filter 1, the effect of reducing the initial pressure drop will be decreased if the number of communicating pores per 1 mm$^2$ of the partition wall is less than 4000. Moreover, the initial PM collection performance will be also decreased. The number of communicating pores per 1 mm$^2$ of the partition wall can be preferably 4,100 or more, more preferably 4,300 or more, even more preferably 4,500 or more, from perspectives such as reducing the initial pressure drop and improving the initial PM collection performance. The number of communicating pores per 1 mm$^2$ of the partition wall can be preferably 5,500 or less, more preferably 5,300 or less, even more preferably 5,100 or less, from perspectives such as reducing the initial pressure drop and keeping the strength from being decreased.

In the exhaust gas purification filter 1, the proportion of the communicating pores 111 of 10 $\mu$m or less in minimum diameter, represented by the formula of 100 $\times$ $N_{min}/N_{all}$, is preferably 90% or more, where $N_{min}$ and $N_{all}$ respectively represent the number of the communicating pores 111 of 10 $\mu$m or less in minimum diameter among the communicating pores 111 and the total number of the communicating pores 111. This configuration allows the initial PM collection performance to be improved.

The minimum diameter of each communicating pore 111 can be determined at the same time as the derivation of the number of communicating pores 111 in the partition wall structure model M with the use of the Percolation Path among the Porodict functions, which is one of the GeoDict modules described above. Specifically, with the partition wall thickness direction in the partition wall structure model M as a Z axis, the position of the center of the maximum inscribed circle among the inscribed circles inscribed on the pore wall surface of the communicating pore 111 is continuously calculated for one voxel to search a path, and in the case where the maximum inscribed circle cannot be inscribed because of the narrow path in the process of searching the path, the calculation is executed again from the beginning with another smaller inscribed circle (= an inscribed circle that is smaller by 1 voxel $\times$ 2 than the maximum inscribed circle), thereby allowing the minimum diameter of each communicating pore 111 to be determined. It is to be noted that it is possible to refer appropriately to the description in the manual of the GeoDict for details of the method of calculation in accordance with the Percolation Path in the GeoDict.

The proportion of the communicating pores 111 of 10 $\mu$m or less in minimum diameter to all of the communicating pores can be preferably 92% or more, more preferably 93% or more, even more preferably 95% or more, from perspectives such as improving the initial PM collection performance.

In the exhaust gas purification filter 1, if the average pore diameter A is smaller than the average surface opening diameter B (A < B), the PM 2 including the ash 23 is more likely to penetrate into the pores 110 of the partition wall 11, thereby making the ash 23 more likely to be deposited in the pores 110. Thus, the ash 23 cross-linking the surface openings 113 is less likely to be detached, thereby leading to an increase in pressure drop by the ash 23 remaining deposited by the use of a vehicle over time. For the exhaust gas purification filter 1, the average pore diameter A($\mu$m) and the average surface opening diameter B($\mu$m) preferably satisfy A > B, from perspectives such as ensuring that the ash 23 remaining deposited by the use of a vehicle over time is prevented from increasing the pressure drop.

In the exhaust gas purification filter 1, the average pore diameter A of the partition wall 11 can be more than 15 $\mu$m and less than 21 $\mu$m. The average pore diameter A of the partition wall 11 is more than 15 $\mu$m, thereby more easily achieving the effect of reducing the initial pressure drop. The average pore diameter A of the partition wall 11 is less than 21 $\mu$m, thereby making it easier to ensure the initial PM collection performance.

In the exhaust gas purification filter 1, the average surface opening diameter B of the pores 110 at the surface of the partition wall 11 may be 11 $\mu$m or more and 20 $\mu$m or less. The average surface opening diameter B of the pores 110 at the surface of the partition wall 11 is 11 $\mu$m or more, thereby more easily achieving the effect of reducing the initial pressure drop. The average surface opening diameter B of the pores 110 at the surface of the partition wall 11 is 20 $\mu$m or less, thereby making the PM 2 including the ash 23 less likely to be deposited in the partition wall 11, making the ash 23 more likely to be detached, and making it easier to prevent the ash 23 remaining deposited by the use of a vehicle over time from increasing the pressure drop.

In the exhaust gas purification filter 1, the surface opening ratio of the pores 110 at the surface of the partition wall 11 on the side into which the exhaust gas G flows may be 30% or more and 40% or less. The surface opening ratio of the pores 110 at the surface of the partition wall 11 is 30% or more, thereby more easily achieving the effect of reducing the initial pressure drop. In addition, the surface opening ratio of the pores 110 at the surface of the partition wall 11 is 40% or less, thereby making the PM 2 including the ash 23 less likely to be deposited in the partition wall 11, making the ash 23 more likely to be detached, and making it easier to prevent the ash 23 remaining deposited by the use of a vehicle over time from increasing the pressure drop.

The surface opening ratio of the pores 110 at the surface of the partition wall 11 can be calculated from the formula of 100 $\times$ (the total value of the areas of the respective surface openings 113 in all of the binarized images described above)/(the total value of the areas of all of the binarized images). The "all of the binarized images" refers to the binarized images at the five points described above for describing the method for measuring the average surface opening diameter B of the pores 110 at the surface of the partition wall 11.

In the exhaust gas purification filter 1, the porosity of the partition wall 11 may be 60% or more and 70% or less. The porosity of the partition wall 11 is 60% or more, thereby making it easier to achieve a reduction in initial pressure drop and an improvement in PM collection performance. In addition, the porosity of the partition wall 11 is 70% or less, thereby making it easier to ensure the strength of the exhaust gas purification filter 1 itself, and making it easier to prevent cracks due to stress in the case of casing or heat generation in the case of recycling the PM 2. The porosity of the partition wall 11 can be, from perspectives such as reduction in initial pressure drop, preferably 62% or more, more preferably 63% or more. In addition, the porosity of the partition wall 11 can be, from perspectives such as an improvement in the strength of the exhaust gas purification filter 1, preferably 68% or less, more preferably 67% or less, even more preferably 66% or less. It is to be noted that these upper and lower limits can be each combined arbitrarily.

The porosity of the partition wall 11 is measured by a mercury porosimeter based on the principle of the mercury intrusion technique in the same manner as the method for measuring the average pore diameter A of the partition wall 11. Specifically, the porosity of the partition wall 11 can be calculated from the following relation expression:

$$\text{Porosity (\%) of Partition Wall 11} = \text{Total Pore Volume}/(\text{Total Pore Volume} + 1/\text{True Specific Gravity of Partition Wall Material}) \times 100$$

It is to be noted that in the case where the partition wall material is cordierite, a value of 2.52 can be used as the true specific gravity of the cordierite.

The exhaust gas purification filter 1 with the deposited ash 23 of 20 g/L or more and 40 g/L or less can be configured such that a value of a gas permeability coefficient ratio $k_c/k_{10}$ is 1.5 or less, where $k_{10}$ and $k_c$ respectively represent the gas permeability coefficient of the partition wall 11 at a position $X_{10}$ (see Fig. 2) of 10 mm from the filter end surface 15 on the exhaust gas inflow side and the gas permeability coefficient of the partition wall at a central position Xc (see Fig. 2) between the filter end surface 15 on the exhaust gas inflow side and the filter end surface 16 on the exhaust gas outflow side. This configuration makes it possible to ensure that the pressure drop is kept from increasing after ash deposition.

In regard to the foregoing, if the amount of the ash 23 deposited is smaller than 20 g/L, the ash 23 fails to be deposited on the external partition wall 11, or is deposited in minute amounts at both the position $X_{10}$ which is 10 mm from the filter end surface 15 on the exhaust gas inflow side and the central position Xc between the filter end surface 15 on the exhaust gas inflow side and filter end surface 16 on the exhaust gas outflow side, thus making it difficult to obtain the effect of detaching of the ash 23. Thus, in regard to the foregoing, the amount of the ash 23 deposited is adjusted to be 20 g/L or more. In contrast, if the amount of the ash 23 deposited is larger than 40 g/L, the increased amount of the ash 23 detached and then deposited on the most downstream filter part 10 is believed to affect even the central position Xc between the filter end surface 15 on the exhaust gas inflow side and filter end surface 16 on the exhaust gas outflow side, thus making it difficult to obtain the effect of detaching of the ash 23. Thus, in regard to the foregoing, the amount of the ash 23 deposited is adjusted to be 40 g/L or less.

$k_c/k_{10}$ is an index that shows the magnitude relationship between the gas permeability coefficient $k_c$ and the gas permeability coefficient $k_{10}$. The gas permeability coefficient of the partition wall 11 becomes smaller in value as the ash 23 is deposited more. In addition, the flow velocity of the exhaust gas G introduced into the cell 2 of the exhaust gas purification filter 1 is higher at the position $X_{10}$ which is 10 mm from the filter end surface 15 on the exhaust gas inflow side than at the central position Xc between the filter end surface 15 on the exhaust gas inflow side and the filter end surface 16 on the exhaust gas outflow side. More specifically, as a relationship, the amount of the ash 23 deposited is larger at the position $X_{10}$ which is 10 mm from the filter end surface 15 on the exhaust gas inflow side than at the central position Xc between the filter end surface 15 on the exhaust gas inflow side and the filter end surface 16 on the exhaust gas outflow side. Considering this relationship in terms of gas permeability coefficient, the gas permeability coefficient $k_c$ is larger than the gas permeability coefficient $k_{10}$ as the relationship between the gas permeability coefficient $k_{10}$ and the gas permeability coefficient $k_c$ after the deposition of the ash 23. More specifically, the value of $k_c/k_{10}$ is typically larger in a conventional exhaust gas purification filter not including the configuration according to the present disclosure. As described later in experiment examples, specifically, when the value of $k_c/k_{10}$ exceeds 1.5, the rate of increase in pressure drop after the deposition of the ash 23 is increased with respect to the initial pressure drop, which is not preferred. This is believed to be because the ash 23 on the surface of the partition wall 11 at the position $X_{10}$ which is 10 mm from the filter end surface 15 on the exhaust gas inflow side does not become detached, but is deposited in the pores 110. Accordingly, the value of $k_c/k_{10}$ is preferably 1.5 or less for reducing the rate of increase in pressure. This is believed to be because detaching of the ash 23 on the surface of the partition wall 11 is promoted around the position $X_{10}$ which is 10 mm from the filter end surface 15 on the exhaust gas inflow side. The ash 23 is, however, not all detached, then transported to and deposited around the sealing part 13 of the most downstream filter part 10. The ash 23 partially remains in the partial wall 11 or around the surface of the partition wall 11. As a result of the foregoing, the value of $k_c/k_{10}$ within the range of 1.5 or less allows the rate of increase in pressure drop after the deposition of the ash 23 to be kept low with respect to the initial pressure drop.

It is to be noted that the respective gas permeability coefficients $k_{10}$ and $k_c$ are measured in the following manner. First, the ash 23 of 20 g/L or more and 40 g/L or less is deposited on the exhaust gas purification filter 1. The ash 23 can be deposited by starting a gasoline engine with the use of a gasoline including 2% of ash derived from an engine oil and depositing the ash on the exhaust gas purification filter 1 equipped in an exhaust passage. Specifically, (1) the PM 2 is deposited under the condition of a central temperature of 800°C in the exhaust gas purification filter 1 for 9 minutes under a stoichiometric atmosphere, and (2) the PM 2 is recycled under the condition of a central temperature from 800°C to 900°C in the exhaust gas purification filter 1 for 1 minute under an air atmosphere. The deposition of the PM 2 in accordance with the foregoing (1) and the recycling of the PM 2 in accordance with foregoing (2) are repeated to deposit the ash 23 on the exhaust gas purification filter 1. The amount of the ash 23 deposited can be calculated by measuring the weight of the exhaust gas purification filter 1 removed appropriately.

Next, for the exhaust gas purification filter 1 with the predetermined amount of ash 23 deposited, measurement samples not including the sealing part 13 are cut out and collected respectively from the position $X_{10}$ which is 10 mm from the filter end surface 15 on the exhaust gas inflow side and the central position Xc between the filter end surface 15 on the exhaust gas inflow side and filter end surface 16 on the exhaust gas outflow side. In this regard, the measurement sample at the position $X_{10}$ is collected such that the position which is 10 mm from the filter end surface 15 on the exhaust gas inflow side serves as an upstream end surface. In contrast, the measurement sample at the central position Xc is collected such that the central position Xc serves as an upstream end surface. The shape of each measurement sample is a cylindrical shape of 30 mm in diameter with a length of 25 mm in the filter axial direction. It is to be noted that the skin part 14 of each measurement sample cut out can be formed by, for example, cementing.

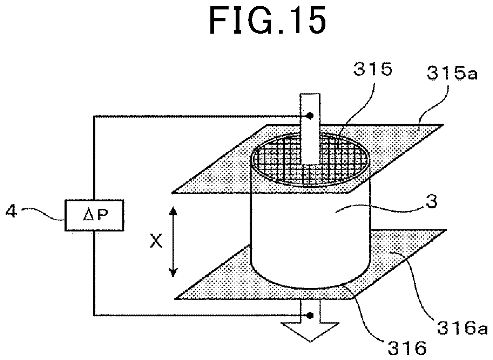

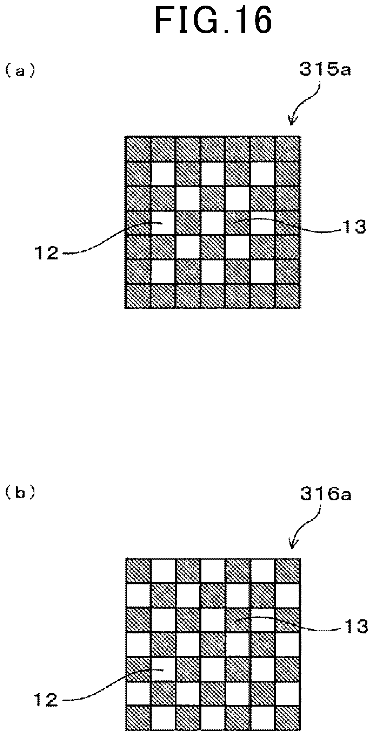

Then, as illustrated in Fig. 15, polyester tapes 315a and 316a are attached respectively to both end surfaces 315 and 316 of a measurement sample 3 in the filter axial direction X. Then, for example, a soldering iron or the like is used to partially remove the polyester tapes 315a and 316a such that the polyester tapes 315a and 316a form the alternate sealing parts 13. In this manner, for the upstream end surface 315 of the measurement sample 3 as the filter end surface on the exhaust gas inflow side, as illustrated in Fig. 16(a), for example, thirteen of the cells 12 are opened, whereas the other cells 12 are closed by the sealing parts 13 made of the polyester tape 315a. In contrast, for the downstream end surface 316 of the measurement sample 3 as the filter end surface on the exhaust gas outflow side, as illustrated in Fig. 16(b), for example, twenty four of the cells 12 are opened, whereas the other cells 12 are closed by the sealing parts 13 made of the polyester tape 316a. More specifically, the sealing parts 13 made of the polyester tapes 315a and 316a are formed instead of the sealing parts 13 made of ceramics. It is to be noted that while the measurement sample 3 with the sealing parts 13 formed from the polyester tapes 315a and 316a has been described for the measurement of the gas permeability coefficients, similar results will be obtained even with the use of a measurement sample 3 with ceramic sealing parts 13 formed.

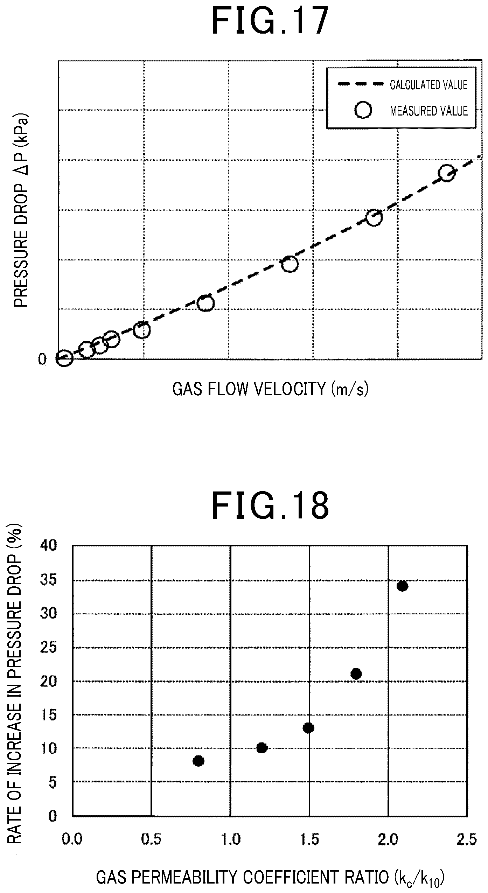

Next, as illustrated in Fig. 15, gas is allowed to flow from the upstream end surface 315 of the measurement sample 3 toward the downstream end surface 316 of the measurement sample 3, and the relationship between the gas flow velocity and the pressure drop is measured by a perm porometer 4. Specifically, the pressure drop is measured in the case of changing the gas flow velocity. It is to be noted that an arrow in Fig. 15 indicates the flow of the gas. Then, a diagram is determined for the relationship between the gas flow velocity (X axis) and the pressure drop (Y axis). Fig.17 shows an example of the diagram of relationship between the gas flow velocity (X axis) and the pressure drop (Y axis). This relationship diagram shows the values (plot points) actually measured by the perm porometer 4 and the calculated values (dashed line) determined from the Equations (i) to (viii). The Equations (i) to (viii) will be described below.

The relationship in Equation (i) below is satisfied by the pressure drop ΔP (unit: Pa) of the exhaust gas purification filter 1, the sum $\Delta P_{inlet/exit}$ (unit: Pa) of the condensation pressure drop $\Delta P_{inlet}$ produced when the gas flows into the cell 12 and the enlargement pressure drop $\Delta P_{exit}$ produced when the gas exits the cell 12, $\Delta P_{channel}$ (unit: Pa) produced when the gas passes through the cell 12, and $\Delta P_{wall}$ (unit: Pa) produced when the gas passes through the partition wall 11.

$$\Delta P = \Delta P_{inlet/exit} + \Delta P_{channel} + \Delta P_{wall} \qquad \dots (i)$$

In addition, the relationship in Equation (ii) below is satisfied by $\Delta P_{inlet/exit}$, the opening area $A_{open}$ (unit: $m^2$) of the cell 12, the opening area $A_{in}$ (unit: $m^2$) of the cell 12 at the filter end surface 15 on the exhaust gas inflow side, the gas flow velocity $V_{channel}$ (unit: m/s) in the cell 12, and the air density ρ (unit: $kg/m^3$).

[Formula 1]

$$\Delta P_{inlet/exit} = \left[1 - \frac{A_{open}}{A_{in}}\right]^2 \cdot \frac{1}{2}\rho\, V^2_{channel} + \left(0.04 - \left(\frac{1}{0.582 + \dfrac{0.0418}{1.1 - \left[\dfrac{A_{open}}{A_{in}}\right]^{-0.5}}}\right)\right)^2 \cdot \frac{1}{2}\rho\, V^2_{channel}$$

$$\cdots \text{(ii)}$$

In addition, the relationships in Equations (iii) to (viii) below are satisfied by $\Delta P_{channel} + \Delta P_{wall}$, the gas permeability coefficient k (unit: $m^2$), the length L (unit: m) of the exhaust gas purification filter 1 in the filter axial direction X, the hydraulic diameter $a_1$ (unit: m) of the cell 12, the thickness w (unit: m) of the partition wall 11, the friction coefficient F (unit: dimensionless) in the cell 12, the Reynolds number (unit: dimensionless), the gas viscosity (unit: Pa·s), and the gas flow velocity $V_{chanel}$ (unit: m/s) in the cell 12. It is to be noted that e represents an exponential function exp in Equation (iii).

[Formula 2]

$$\Delta P_{channel} + \Delta P_{wall} = \left\{\frac{(e^{g_1}+1)(e^{g_2}+1)(g_2 - g_1)}{4(e^{g_2} - e^{g_1})} + \frac{A_2}{2}\right\} \cdot \frac{\mu\, V_{channel} a_1 w}{4Lk} \quad \cdots \text{(iii)}$$

[Formula 3]

$$g_1 = A_1 - \sqrt{A_1^2 + 2A_2} \quad \cdots \text{(iv)}$$

[Formula 4]

$$g_2 = A_1 + \sqrt{A_1^2 + 2A_2} \quad \cdots \text{(v)}$$

[Formula 5]

$$A_1 = \frac{k}{a_1 w}\frac{4L}{a_1}Re \quad \cdots \text{(vi)}$$

[Formula 6]

$$A_2 = \frac{4Fk}{a_1 w}\left[\frac{L}{a_1}\right]^2 \qquad \cdots \text{(vii)}$$

[Formula 7]

$$Re = \frac{\rho\, V_{channel} a_1}{\mu} \qquad \cdots \text{(viii)}$$

Based on Equations (i) to (viii) mentioned above, the pressure drop values are calculated. The dashed line determined by the calculated values shown in the diagram of relation between the gas flow velocity (X axis) and the pressure drop (Y axis), illustrated in Fig. 17, has pressure drop values determined by the calculation. As will be understood from Equations (i) to (viii), the pressure drop values are calculated by measuring the filter length L, the opening area $A_{open}$ of the cell, the hydraulic diameter $a_1$, and the thickness w of the partition wall 11, excluding the gas permeability coefficient k, and these values are not changed even when the gas flow velocity is changed. Accordingly, any value can be assigned to the gas permeability coefficient to derive a calculated value in the diagram of relation between the gas flow velocity (X axis) and the pressure drop (Y axis).

For example, if a larger value is assigned to the gas permeability coefficient value, the pressure drop value will be lower than the measured value, and the calculated value will fall below the measured value. In contrast, if a smaller value is assigned to the gas permeability coefficient value, the calculated value will exceed the measured value. Then, for providing an approximation such that the calculated value is the closest to the measured value, the gas permeability coefficient k is calculated by the method of least squares so as to minimize the difference between the calculated value and the measured value. This calculated value corresponds to the gas permeability coefficient k. More specifically, the gas permeability coefficient k has a value obtained by back calculation of the gas permeability coefficient in accordance with Equations (i) to (viii) from the measured value of the pressure drop measured by the perm porometer. In the foregoing manner, the gas permeability coefficients $k_{10}$ and $k_c$ at the predetermined positions can be determined with the predetermined amount of ash deposited. It is to be noted that CEP-1100 AXSHJ from Porous Materials Inc., or the like can be used for the perm porometer.

The exhaust gas purification filter 1 described above is capable of producing an adequate effect in use with a catalyst supported on the partial wall 11, but can be also used without any catalyst supported on the partition wall 11. It is to be noted that in the case where a catalyst is supported on the partition wall 11, the amount of the catalyst can be, for example, 30g/L or more and 150 g/L or less. Typically, when a catalyst is supported, the pores 110 in the partition wall 11 are partially closed by the catalyst. In addition, there are various approaches for the method for supporting the catalyst, and examples of the approaches include a case of homogeneously supporting the catalyst in the partition wall 11, and a method of supporting the catalyst more on the surface layer of the partition wall 11. These supporting methods, however, may improve the PM collection efficiency or may degrade the efficiency. According to the present disclosure, the surface opening diameter at the surface of the partition wall 11 is important, and in consideration of the surface opening diameter, the method of homogeneously supporting the catalyst in the partition wall 11 is preferred. With the method of homogeneously supporting the catalyst in the partition wall 11, the ratio of the average surface opening diameter of the pores 110 at the surface of the partition wall 11 to the average pore diameter of the partition wall 11 is not changed with respect to a case of supporting no catalyst. Thus, the PM collection efficiency has a tendency to decrease, whereas the initial pressure drop has a tendency to increase, but the effect of the deposited ash 23 on the pressure drop is not changed.

<Experiment Examples>

Respective exhaust gas purification filters were prepared according to examples and comparative examples. In the experiment example, each exhaust gas purification filter contains, as a main constituent, cordierite that has a chemical composition including $SiO_2$: 45% by mass or more and 55% by mass or less, $Al_2O_3$: 33% by mass or more and 42% by mass or less, and MgO: 12% by mass or more and 18% by mass or less. It is to be noted that containing cordierite as a main constituent means that the cordierite accounts for 50% by mass or more of the filter. Accordingly, for the preparation of each exhaust gas purification filter in the present experiment example, a cordierite-forming raw material including a Si source, an Al source, and a Mg source is used such that cordierite is produced by baking.

-Preparation of Exhaust Gas Purification Filter-

(Example 1)

For the preparation of the exhaust gas purification filter according to Example 1, porous silica (Si source), talc (Mg source), and an aluminum hydroxide (Al source) were blended so as to reach the blending proportions (% by mass) shown in Table 1, thereby preparing a cordierite-forming raw material.

It is to be noted that the porous silica used has a bulk density of 0.22 g/cm$^3$. For the measurement of the bulk density, a tap densitometer from SEISHIN ENTERPRISE Co., Ltd. was used as an instrument for measuring flowability and adhesion by a tap density method. Specifically, a cylinder of the measurement instrument was filled with silica, then the silica was compressed by tapping, and the bulk density was calculated from the mass of the compressed silica and the volume of the cylinder. In addition, aluminum hydroxides of 3 $\mu$m in average particle size and 8 $\mu$m in average particle size were used for the aluminum hydroxide. The "average particle size" refers to a particle size corresponding to an integrated value of 50% in volume in the particle size distribution determined by a laser diffraction/scattering method.

The cordierite-forming raw material was mixed, with a kneader, with water (solvent), a methyl cellulose (binder), and a dispersant added so as to reach the blending proportions (% by mass) shown in Table 1, thereby preparing a clay (also can be referred to as "base material") including the cordierite-forming raw material. The dispersant was intended mainly to inhibit aggregation of particles with each other and improve a deflocculating property, and specifically, a polyoxyethylene polyoxypropylene glyceryl ether having an average molecular weight of 4550 was used.

[Table 1]

|  | Example 1 | |
|---|---|---|
|  | Average Particle Size ($\mu$m) | Blending Proportion (% by mass) |
| Porous Silica (Bulk Density: 0.22 g/cm$^3$) | 16 | 20.8 |
| Talc | 14 | 35.2 |
| Aluminum Hydroxide | 3 | 4.4 |
| Aluminum Hydroxide | 8 | 39.6 |
| Methyl Cellulose | - | 9 |
| Dispersant | - | 7 |
| Water | - | 63 |

In this regard, the raw material system with porous silica used as in Example 1 has a large number of gaps among particles, thus requiring a large amount of solvent (water herein) for the formation of a clay. or increasing the above-mentioned deflocculating property in such a large amount of solvent, it is effective to strongly knead the clay during kneading. It is, however, difficult to directly check whether the kneading inhibits aggregation of particles and disperses the particles in the clay or not.

Thus, in the present experiment example, a clay density deviation rate (also can be referred to as "base material density deviation rate") was introduced as a new index of particle dispersibility in the kneaded clay. Specifically, the clay before extrusion molding with a mold was removed, and sampled from eight points in a random manner. The sampled clay was put into a measurement instrument of 25 mm in diameter and 20 mm in length in a pressurization measurement instrument "Autograph" from SHIMADZU CORPORATION, and the clay density was calculated from the volume and weight of the clay compressed by pressurization at 1 kN and then removed. The average value for the clay densities calculated for the clay at the eight points is referred to as a clay density actually measured. In contrast, the clay density calculated in advance from the blending proportions of the raw materials is referred to as a clay density calculated. The difference (deviation rate) between the clay density calculated and the clay density actually measured is checked, thereby allowing the particle dispersibility to be determined. As the clay density actually measured is lower than the clay density calculated, more air is present on the particle surfaces because of the poor wettability of the dispersant, thus decreasing the particle dispersibility. In contrast, as the clay density actually measured is closer to the value of the clay density calculated, the particle dispersibility is improved.

Example 1 used a clay adjusted by arbitrarily changing the speed of the kneader and the frequency at which the clay was repeatedly passed though the kneader such that the following clay density deviation rate was less than 10%. It is to be noted that the clay density deviation rate has a tendency to become lower as the speed of the kneader is increased. Further, the clay density deviation rate has a tendency to become lower as the frequency at which the clay was repeatedly passed though the kneader is increased.

$$\text{Clay Density Deviation Rate } (\%) = 100 \times \{(\text{Clay Density Calculated}) - (\text{Clay Density Actually Measured})\}/(\text{Clay Density Calculated})$$

The clay adjusted as mentioned above was molded by extrusion molding into the form of a honeycomb. The compact was dried, and then cut into a predetermined length.

Then, the compact was subjected to baking at 1,430°C to obtain a sintered body with a honeycomb structure.

Then, with the use of a dipping method, the exhaust gas inflow end surface and exhaust gas outflow end surface of the cell were alternately filled with a slurry including the same type of ceramic raw material as those for the sintered body with the honeycomb structure, and then subjected to baking, thereby forming sealing parts.

The exhaust gas purification filter according to Example 1 was prepared in the manner described above.

(Examples 2 to 7)

The average particle size and bulk density of the porous silica in the cordierite-forming raw material were changed in Example 1. The pore diameter of the partition wall formed is increased as the average particle size of the porous silica is increased, whereas the porosity of the partition wall formed is increased as the bulk density of the porous silica is decreased. In addition, in the blend of the different aluminum hydroxides that are larger and smaller in particle size, the surface opening ratio and the average surface opening diameter are increased with the increased proportion of larger particle sizes. Furthermore, the increased rate of temperature rises from 1,200°C to 1,430°C for the baking allows the pore diameter and the average surface opening diameter to be increased. These conditions were combined for preparation. It is to be noted that the blend of the different aluminum hydroxides that were larger and smaller in particle size was changed, while the total blending proportion of the aluminum hydroxides was adjusted to be equal to that in Example 1, and the other blending proportions of the clay were equal to that in Example 1. Then, in the same manner as in Example 1, exhaust gas purification filters according to Examples 2 to 7 were prepared by changing the rate of temperature rise from 1,200°C to 1,430°C for the baking, with the use of the clay adjusted by arbitrarily changing the speed of the kneader and the frequency at which the clay was repeatedly passed though the kneader such that the clay density deviation rate was less than 10%.

(Comparative Example 1)

For the preparation of an exhaust gas purification filter according to Comparative Example 1, fused silica (Si source), talc (Mg source), and an aluminum hydroxide (Al source) were blended so as to reach the blending proportions (% by mass) shown in Table 2, thereby preparing a cordierite-forming raw material. It is to be noted that the fused silica used has a bulk density of 1.35 g/cm$^3$.

The cordierite-forming raw material was mixed, with a kneader, with water (solvent), a methyl cellulose (binder), a lubricant oil, and graphite added so as to reach the blending proportions (% by mass) shown in Table 2, thereby preparing a clay including the cordierite-forming raw material. The lubricant oil is intended to improve the sliding between the clay and the molding machine and a metallic part at the mold surface and then increase the molding speed. For the lubricant oil, a rape seed oil as a vegetable oil was used. In addition, the clay density deviation rate was adjusted so as to be less than 10%. Subsequently in the same manner as in Example 1, the exhaust gas purification filter according to Comparative Example 1 was prepared with the use of the clay adjusted as mentioned above.

[Table 2]

|  | Comparative Example 1 | |
| --- | --- | --- |
|  | Average Particle Size ($\mu$m) | Blending Proportion (% by mass) |
| Fused Silica (Bulk Density: 1.35 g/cm$^3$) | 20 | 19.4 |
| Talc | 35 | 35.4 |
| Aluminum Hydroxide | 5 | 45.2 |
| Graphite | 25 | 30 |
| Methyl Cellulose | - | 9 |

(continued)

| | Comparative Example 1 | |
|---|---|---|
| | Average Particle Size ($\mu$m) | Blending Proportion (% by mass) |
| Lubricant Oil | - | 5.5 |
| Water | - | 37 |

(Comparative Example 2)

With the use of the clay adjusted so as to be 10% or more by arbitrarily changing the speed of the kneader and the frequency at which the clay was repeatedly passed though the kneader in Example 1, an exhaust gas purification filter according to Comparative Example 2 was prepared.

(Comparative Examples 3 and 4)

The average particle sizes of the fused silica and talc and the blending proportion of the graphite in the cordierite-forming raw material were changed in Comparative Example 1. In the same manner as in Comparative Example 1 except for the foregoing change, the clay was adjusted such that the clay density deviation rate was less than 10%, thereby preparing exhaust gas purification filters according to Comparative Examples 3 and 4.

-Measurement of Partition Wall Characteristics-

For the exhaust gas purification filters according to the examples and the comparative examples, partition wall characteristics were measured. Specifically, the porosity of the partition wall and the average pore diameter A of the partition wall were measured in accordance with the measurement methods described above. In this regard, AutoPore IV 9500 from SHIMADZU CORPORATION was used for the mercury porosimeter. In addition, the average surface opening diameter B of pores at the partition wall surface and the surface opening ratio of the pores at the partition wall surface were measured in accordance with the measurement method described above. In this regard, a Quanta 250 FEG from FEI Company was used for the SEM. WinROOF Ver. 7.4 from MITANI CORPORATION was used for image analysis software. In addition, the number of communicating pores per 1 mm$^2$ of the partition wall and the proportion of communicating pores of 10 $\mu$m or less in minimum diameter to all of the communicating pores were determined in accordance with the measurement method described above. In this regard, "Versa XRM-500" from Xradia Inc. was used for the X-ray CT scanner. In addition, GeoDict 2017 marketed by SCSK CORPORATION was used for the microstructure simulation software. In addition, the value of the gas permeability coefficient ratio $k_c/k_{10}$ in the exhaust gas purification filter was measured in accordance with the measurement method described above. In this regard, a CEP-1100 AXSHJ from Porous Materials Inc. was used for the perm porometer.

-Evaluation-

The initial PM collection efficiency, the initial pressure drop, and the pressure drop after ash deposition were measured for each exhaust gas purification filter. It is to be noted that the exhaust gas purification filter including a cell structure with a shape of $\phi$ 118.4 mm (filter diameter) $\times$ L 120 mm (filter length), a partition wall thickness of 8.5 mil, and a cell number of 300 cpsi was used for the initial PM collection efficiency, the initial pressure drop, and the pressure drop after ash deposition.

(Initial PM Collection Efficiency, Initial Pressure Drop)

The initial PM collection efficiency was measured in the following manner. The exhaust gas purification filter prepared was attached in an exhaust pipe of a gasoline direct-injection engine, and an exhaust gas including PM was allowed to flow through the exhaust gas purification filter. In this case, Nin and $N_{out}$ were measured, the $N_{in}$ indicating the PM number concentration in the exhaust gas before flowing into the exhaust gas purification filter, and the $N_{out}$ indicating the PM number concentration in the exhaust gas flowing out of the exhaust gas purification filter. The initial PM collection efficiency was calculated from $100 \times (N_{in} — N_{out})/N_{in}$. In this regard, the measurement conditions were a temperature of 450°C and an exhaust gas flow rate of 2.8 m$^3$/min. For the measurement of the PM number concentration mentioned above, a PM particle number counter "AVL-489" from AVL was used. In contrast, the initial pressure drop was measured in the following manner. At the same time as the measurement of the initial PM collection efficiency, the (upstream) pressure before the exhaust gas purification filter and the (downstream) pressure before the exhaust gas purification filter were measured by a pressure sensor, and the difference therebetween was defined as the initial pressure drop. In this regard, the measurement conditions were a temperature of 720°C and an exhaust gas flow rate of 11.0 m$^3$/min. It is to be noted that each exhaust gas purification filter that was in the initial state without any PM deposited and was not coated with any catalysts was used for each measurement.

In the present experiment example, a case with the initial PM collection efficiency of 70% or more was rated as "A" meaning the initial PM collection efficiency was sufficiently ensured. A case with the initial PM collection efficiency of 60% or more and less than 70% was rated as "B" meaning the initial PM collection efficiency was ensured but to a lesser degree. A case with the initial PM collection efficiency of less than 60% was rated as "C" meaning that there was an insufficient initial PM collection efficiency. In addition, a case with the initial pressure drop of 6 kPa or less was rated as "A" meaning a sufficiently achieved effect of reducing the initial pressure drop. A case with the initial pressure drop of more than 6 kPa and 7 kPa or less was rated as "B" meaning it achieved an effect of reducing the initial pressure drop but to a lesser degree. A case with the initial pressure drop of more than 7 kPa was rated as "C" meaning a failure to achieve the effect of reducing the initial pressure drop.

(Pressure Drop after Ash Deposition)

Ash of 20 g/L or more and 40 g/L or less was deposited on each exhaust gas purification filter that was in the initial state without any PM deposited and was not coated with any catalysts. The ash was deposited by starting a gasoline engine with the use of a gasoline including 2% of ash derived from an engine oil and depositing the ash on the exhaust gas purification filter equipped in an exhaust passage. Specifically, (1) PM deposition of depositing a PM under the condition of a central temperature of 800°C in the exhaust gas purification filter for 9 minutes under a stoichiometric atmosphere, and (2) PM recycling of recycling the PM under the condition of a central temperature from 800°C to 900°C in the exhaust gas purification filter for 1 minute under the air atmosphere were repeated to deposit the ash on the exhaust gas purification filter. In this regard, the amount of the ash deposited was obtained by measuring the weight of the exhaust gas purification filter removed appropriately. Thereafter, in the same manner as for the initial pressure drop mentioned above, the pressure before the exhaust gas purification filter and the pressure after the exhaust gas purification filter were measured by a pressure sensor, and the difference therebetween was determined as a pressure drop after the ash deposition. In the present experiment example, a case with a pressure drop of 13 kPa or less after the ash deposition for depositing the ash of 30 g/L was rated as "A" meaning the effect of keeping the pressure drop from increasing after the ash deposition was sufficiently achieved. Likewise, a case with a pressure drop of more than 13 kPa and 15 kPa or less after the ash deposition was rated as "B" meaning the effect of keeping the pressure drop from increasing after the ash deposition was achieved but to a lesser degree. A case with a pressure drop of more than 15 kPa after the ash deposition was rated as "C" meaning a failure to achieve the effect of keeping the pressure drop from increasing after the ash deposition. In addition, the rate of increase in pressure drop after the ash deposition with respect to the initial pressure drop was determined from the formula of $100 \times (P_{ash\text{-}loaded} - P_{fresh})/P_{fresh}$ with the initial pressure drop represented by $P_{fresh}$ and the pressure drop after ash deposition represented by $P_{ash\text{-}loaded}$. Fig. 18 shows the relationship between the gas permeability coefficient ratio $k_c/k_{10}$ and the rate of increase in pressure drop. It is to be noted that Fig. 18 shows the results of the exhaust gas purification filter according to Example 1 as a typical example of the respective examples.

Table 3 together shows the results of the experiments mentioned above.

[Table 3]

| | Addition of Pore-Forming Agent | Clay Density Deviation Rate (%) | Partition Wall | | | | | | Evaluation | | |
|---|---|---|---|---|---|---|---|---|---|---|---|
| | | | Porosity (%) | Surface Opening Ratio of Pores (%) | Average Pore Diameter A ($\mu$m) | Average Surface Opening Diameter B of Pores ($\mu$m) | Number of Communicating Pores per 1 mm$^2$ of Partition Wall (/mm$^2$) | Proportion of Communicating Pores of 10$\mu$m or less in Minimum Diameter to All Communicating Pores (%) | Initial PM Collection Efficiency | Initial Pressure Drop | Pressure Drop after Ash Deposition |
| Example 1 | No | < 10 | 64.8 | 36.2 | 18.2 | 16.6 | 4758 | 96.9 | A | A | A |
| Example 2 | No | < 10 | 66.5 | 38.2 | 17.2 | 13.3 | 4518 | 97.1 | A | A | A |
| Example 3 | No | < 10 | 69.8 | 39.6 | 19.3 | 15.8 | 4923 | 95.6 | A | A | A |
| Example 4 | No | < 10 | 60.2 | 32.7 | 20.9 | 19.8 | 4002 | 88.2 | B | A | A |
| Example 5 | No | < 10 | 65.3 | 30.2 | 15.1 | 13.9 | 4998 | 97.2 | A | B | A |
| Example 6 | No | < 10 | 67.2 | 32.5 | 17.2 | 11.3 | 4105 | 89.3 | B | A | A |
| Example 7 | No | < 10 | 67.7 | 35.9 | 17.7 | 15.8 | 4894 | 96.4 | A | A | A |
| Comparative Example 1 | Yes | < 10 | 64.9 | 47.4 | 20.7 | 22.8 | 3505 | 93.2 | C | C | c |
| Comparative Example 2 | No | 10 ≤ | 64.3 | 29.8 | 15.6 | 18.8 | 3888 | 95.7 | C | C | c |
| Comparative Example 3 | Yes | 10 ≤ | 60.2 | 45.3 | 26.4 | 27.3 | 3101 | 87.8 | C | C | c |
| Comparative Example 4 | Yes | 10 ≤ | 66.0 | 49 | 21.1 | 23.4 | 3722 | 94.9 | C | C | c |

As shown in Table 3, it has been confirmed that the exhaust gas purification filters according to Examples 1 to 7, where the number of communicating pores per 1 mm$^2$ of the partition wall is adjusted to be equal to or more than a specific number, and the average pore diameter A($\mu$m) of the partition wall and the average surface opening diameter B($\mu$m) at the partition wall surface satisfy A ≥ B, are capable of reducing the initial pressure drop, ensuring the initial PM collection efficiency, and keeping the pressure drop from increasing after the ash deposition.

In contrast, the exhaust gas purification filters according to Comparative Examples 1 to 4, where the number of communicating pores per 1 mm$^2$ of the partition wall is adjusted to be less than a specific number, or the average pore diameter A($\mu$m) of the partition wall and the average surface opening diameter B($\mu$m) of pores at the partition wall surface satisfy A < B, failed to achieve any of reducing the initial pressure drop, ensuring the initial PM collection efficiency, and keeping the pressure drop from increasing after the ash deposition.

In comparison between the exhaust gas purification filters according to Examples 4 and 6 and the exhaust gas purification filters according to Examples 1 to 3, 5, and 7, it is determined that the initial PM collection performance can be improved when the proportion of the communicating pores 111 of 10 $\mu$m or less in minimum diameter is 90% or more to all of the communicating pores. In addition, in comparison between the exhaust gas purification filter according to Example 5 and the exhaust gas purification filters according to Examples 1 to 4, 6, and 7, it is determined that the effect of reducing the initial pressure drop is more easily achieved as the average pore diameter A of the partition wall is increased in the range in excess of 15 $\mu$m. In addition, in comparison between the exhaust gas purification filter according to Example 4 and the exhaust gas purification filters according to Examples 1 to 3 and 5 to 7, it is determined that the initial PM collection performance is more easily ensured by reducing the average pore diameter A of the partition wall to be in the range of less than 21 $\mu$m. In addition, in comparison between the exhaust gas purification filters according to Examples 1 to 7 and the exhaust gas purification filter according to Comparative Example 2, it is determined that the effect of reducing the initial pressure drop is more easily achieved by adjusting the surface opening ratio of the pores at the partition surface to 30% or more. In addition, in comparison between the exhaust gas purification filters according to Examples 1 to 7 and the exhaust gas purification filters according to Comparative Example 1, 3, and 4, it is determined that the surface opening ratio of the pores at the partition surface should be adjusted to 40% or less, thereby making the PM including the ash less likely to be deposited in the partition wall, making the ash more likely to be detached, and making it easier to prevent the ash remaining deposited by the use of a vehicle over time from increasing the pressure drop.

It is to be noted that in the exhaust gas purification filters according to Examples 1 to 7, the value of the gas permeability coefficient ratio $k_c/k_{10}$ was 1.5 or less, with the deposited ash of 20g/L or more and 40 g/L or less. This configuration can be considered capable of ensuring that the pressure drop is kept from increasing after the ash deposition, as shown in Fig. 18.

The present disclosure is not to be considered limited to the embodiments or experiment example mentioned above, and can be variously modified without departing from the scope of the disclosure. In addition, the respective configurations represented in the embodiments and the respective experiment examples can be optionally combined. More specifically, although the present disclosure is described with reference to the embodiments, it is understood that the present disclosure is not to be considered limited to the previous embodiments, the structures, or the like. The present disclosure encompasses even various modification examples and modifications in the equivalent scope. In addition, various combinations and forms, and furthermore, other combinations and forms including only one element or more or less besides the various combinations and forms are even considered to fall within the idea of the present disclosure.

**Claims**

1. An exhaust gas purification filter (1) disposed in an exhaust passage of a gasoline engine, the exhaust gas purification filter comprising:

   partition walls each (11) comprising a plurality of pores (110);
   a plurality of cells (12, 121, 122) partitioned by the partition walls; and
   sealing parts (13) that alternately seal ends of the plurality of cells in the exhaust gas purification filter, wherein:

   the partition walls each comprises communicating pores (111) communicated with the adjacent cells;
   a number of communicating pores (111) per 1 mm$^2$ of the partition wall is 4,000 or more; and
   A ≥ B is satisfied, where A($\mu$m) is an average pore diameter of the partition wall and B($\mu$m) is an average surface opening diameter of the pores at a surface of the partition wall.

2. The exhaust gas purification filter according to claim 1, wherein
   a proportion of the communicating pores of 10 $\mu$m or less in minimum diameter, represented by a formula of 100 × $N_{min}/N_{all}$, is 90% or more, where $N_{min}$ is a number of the communicating pores of 10 $\mu$m or less in minimum diameter among the communicating pores and $N_{all}$ is a total number of the communicating pores.

3. The exhaust gas purification filter according to claim 1 or 2, wherein:

the partition wall has an average pore diameter A of more than 15 $\mu$m and less than 21 $\mu$m; and
the pores at the surface of the partition wall have an average surface opening diameter B of 11 $\mu$m or more and 20 $\mu$m or less.

4. The exhaust gas purification filter according to any one of claims 1 to 3, wherein the pores at the surface of the partition wall have a surface opening ratio of 30% or more and 40% or less.

# FIG.1

# FIG.2

EP 3 919 157 A1

# FIG.3

# FIG.4

20

# FIG.5

# FIG.6

# FIG.7

# FIG.8

# FIG.9

# FIG.10

# FIG.11

# FIG.12

# FIG.13

# FIG.14

# FIG.15

# FIG.16

(a)

315a

12

13

(b)

316a

13

12

# FIG.17

# FIG.18

## INTERNATIONAL SEARCH REPORT

| International application No. |
| --- |
| PCT/JP2020/025953 |

**A. CLASSIFICATION OF SUBJECT MATTER**
Int.Cl. B01D39/20(2006.01)i, B01D46/00(2006.01)i, C04B38/00(2006.01)i,
F01N3/022(2006.01)i
FI: F01N3/022C, B01D46/00302, C04B38/00303Z, B01D39/20D
According to International Patent Classification (IPC) or to both national classification and IPC

**B. FIELDS SEARCHED**

Minimum documentation searched (classification system followed by classification symbols)
Int.Cl. B01D39/20, B01D46/00, C04B38/00, F01N3/022

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005-95884 A (HITACHI METALS LTD.) 14.04.2005 (2005-04-14), paragraphs [0001], [0002], [0011]-[0028], fig. 1 | 1-4 |
| A | JP 2011-147931 A (NGK INSULATORS LTD.) 04.08.2011 (2011-08-04), entire text, all drawings | 1-4 |
| A | JP 2017-23919 A (NGK INSULATORS LTD.) 02.02.2017 (2017-02-02), entire text, all drawings | 1-4 |
| A | WO 2008/136232 A1 (NGK INSULATORS LTD.) 13.11.2008 (2008-11-13), entire text, all drawings | 1-4 |
| A | JP 2015-211944 A (NGK INSULATORS LTD.) 26.11.2015 (2015-11-26), entire text, all drawings | 1-4 |
| A | JP 2010-537929 A (CORNING INC.) 09.12.2010 (2010-12-09), entire text, all drawings | 2 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28.08.2020 | 08.09.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/025953

| | | |
|---|---|---|
| JP 2005-95884 A | 14.04.2005 | US 2007/0039297 A1<br>paragraphs [0001], [0002],<br>[0020], [0021], [0030]-[0038],<br>[0129], fig. 1<br>WO 2005/021463 A1<br>EP 1666436 A1<br>KR 10-2006-0126432 A<br>CN 1845885 A |
| JP 2011-147931 A | 04.08.2011 | US 2011/0212831 A1<br>entire text, all drawings<br>EP 2339135 A1 |
| JP 2017-23919 A | 02.02.2017 | US 2017/0014747 A1<br>entire text, all drawings<br>DE 102016007190 A1 |
| WO 2008/136232 A1 | 13.11.2008 | US 2010/0135866 A1<br>entire text, all drawings<br>EP 2158956 A1 |
| JP 2015-211944 A | 26.11.2015 | (Family: none) |
| JP 2010-537929 A | 09.12.2010 | US 2009/0087613 A1<br>entire text, all drawings<br>WO 2009/032119 A2<br>EP 2188228 A2<br>CN 101939271 A<br>PL 2188228 T3 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019139122 A

- JP 2017164691 A